(19) Europäisches Patentamt
European Patent Office
Office européen des brevets

(11) **EP 2 273 727 A1**

(12) **DEMANDE DE BREVET EUROPEEN**

(43) Date de publication:
**12.01.2011 Bulletin 2011/02**

(51) Int Cl.:
*H04L 12/26* (2006.01)      *H04L 12/56* (2006.01)

(21) Numéro de dépôt: **10164666.9**

(22) Date de dépôt: **01.06.2010**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**
Etats d'extension désignés:
**BA ME RS**

(30) Priorité: **25.06.2009  FR 0954361**

(71) Demandeur: **FRANCE TELECOM**
**75015 Paris (FR)**

(72) Inventeurs:
• **Cauchie, Grégory**
  **92160 Antony (FR)**
• **Capelle, Marc**
  **91380 Chilly-Mazarin (FR)**
• **Fourneau, Frédéric**
  **93210 La Plaine Saint Denis (FR)**

(74) Mandataire: **Le Saux, Gaël**
  **Cabinet Vidon**
  **Technopole Atalante**
  **16B, rue de Jouanet**
  **35703 Rennes Cedex 7 (FR)**

(54) **Procede d'obtention d'une information representative d'une disponibilité d'un réseau de communication, dispositif et programme d'ordinateur correspondant**

(57)     L'invention concerne un procédé d'obtention d'une information représentative d'une disponibilité d'un réseau de communication comprenant une pluralité d'équipements s'échangeant des données de routage selon un protocole de routage.

  Selon l'invention, un tel procédé comprend :
- une phase d'enregistrement en ordre chronologique d'au moins certaines desdites données de routage échangées entre au moins un premier et au moins un deuxième équipement ;
- une phase de comptabilisation de durées d'indisponibilité en fonction desdites données de routage enregistrées en ordre chronologique pour une période temporelle prédéterminée ;
- une phase d'obtention de ladite information représentative d'une disponibilité pour ladite période temporelle en fonction desdites durées d'indisponibilité comptabilisées.

Figure 2

EP 2 273 727 A1

**Description**

## 1 DOMAINE DE L'INVENTION

La présente invention se rapporte au domaine des réseaux de communication. La présente invention se rapporte plus particulièrement à la détermination d'une disponibilité d'un réseau de communication.

La vocation première d'un réseau de communication est d'acheminer des données d'une ou plusieurs sources vers une ou plusieurs destinations. Il est généralement géré par un opérateur de télécommunication qui offre ainsi des services réseau à des clients. Ces clients peuvent être des utilisateurs ou des fournisseurs de services.

La disponibilité d'un réseau de communication peut être définie comme étant le pourcentage de temps, dans une période temporelle donnée, durant lequel un paquet entrant dans n'importe quel équipement de routage du réseau de communication a pu joindre sa destination dans ce même réseau.

D'autres définitions de la disponibilité existent : il peut par exemple s'agir du pourcentage de temps, dans une période temporelle donnée, d'indisponibilité d'équipement de routage rapporté au nombre d'équipements du réseau de communication.

Pour prendre en compte des exigences administratives, commerciales et techniques, les réseaux de communication évoluent régulièrement. Les utilisateurs (par exemple les internautes) et les nouveaux services offerts par les fournisseurs de service (service de vidéo à la demande, voix sur IP) sont de plus en plus exigeants sur les performances et la qualité du réseau. Les autorités administratives imposent également dans certains cas des contraintes aux opérateurs de télécommunication afin que ceux-ci respectent certaines exigences. Pour répondre à ces exigences, les opérateurs de télécommunication font évoluer leurs réseaux, évolution qui s'accompagne d'une forte augmentation de la complexité de ceux-ci. Il est donc important pour un opérateur de télécommunication (comme un fournisseur de services Internet) de connaître la disponibilité de son réseau, tant pour l'améliorer que pour faire valoir sa bonne performance auprès de ses clients ou de ses partenaires commerciaux.

## 2 ART ANTERIEUR

Il existe plusieurs mécanismes permettant de réaliser une évaluation de la disponibilité d'un réseau de communication. Ces mécanismes sont basés sur la détection et sur l'évaluation de chemins. En effet, les données qui transitent dans un réseau de communication sont acheminées par des chemins, sorte de routes menant d'une source à une destination.

L'apprentissage d'un chemin à emprunter au sein d'un réseau pour acheminer des données de la source à la destination peut être obtenu de plusieurs façons différentes notamment :

- manuellement, si chaque équipement du réseau de communication possède une entrée statique indiquant par destination la direction vers laquelle ledit équipement doit relayer les données reçues. Cette méthode n'est pas très répandue et souvent inadaptée aux réseaux de grande taille de type IP.
- automatiquement, si les équipements du réseau de communication utilisent un ou plusieurs protocoles de routage : un équipement communique à ses voisins sa connaissance topologique locale du réseau ainsi que les adresses qu'il sait pouvoir joindre. Il reçoit symétriquement le même type d'informations de la part de ses voisins. Des métriques, c'est-à-dire des poids, sont définies sur chaque lien d'un réseau de communication. Ces métriques sont à l'origine de la construction de tous les chemins et permettent aux équipements de router, ou transférer, un paquet de données vers une destination en utilisant le chemin de poids le plus faible, aussi appelé plus court chemin (méthode dite *Shortest Path First* en anglais). Les données de ce type qui transitent entre les équipements sont appelées données de routage.

Afin de réagir rapidement aux cas de panne ou d'indisponibilité de chemins, et ainsi améliorer leur disponibilité, les réseaux de communication actuels effectuent donc un apprentissage dynamique des chemins par l'utilisation de protocoles de routage : dès qu'un événement survient dans un réseau, tous les équipements du réseau sont informés et peuvent ainsi prendre les décisions individuelles nécessaires pour réorienter les données vers un chemin alternatif et valide.

Ce changement n'est cependant pas immédiat, notamment à cause d'une inertie de propagation des informations entre les différents équipements du réseau de communication, et de surcroît, il n'est pas sûr qu'un autre chemin soit disponible pour acheminer les données.

Les protocoles de routage les plus utilisés sont les protocoles à état de liens ou « link state » tels que IS-IS (de l'anglais « Intermediate System to Intermediate System ») et OSPF (de l'anglais « Open Shortest Path First »).

Pour connaître le temps au cours duquel le réseau n'a pu correctement répondre au besoin d'acheminement des données, les opérateurs de télécommunication utilisent une ou plusieurs des techniques suivantes :

- une collecte des alarmes des équipements dans le but de connaître le temps d'indisponibilité de chemins et/ou d'équipements.
- une utilisation, à différents endroits du réseau, d'équipements injectant une certaine quantité de données de test à destination d'autres équipements afin de calculer le temps au cours duquel aucune information n'a été reçue.
- une collecte de compteurs de trafic disponibles dans chaque équipement et donnant les variations de quantité de trafic transportés sur chaque conduit du réseau.

Ces techniques présentent des inconvénients.

La collecte d'alarmes en provenance d'équipements suppose que ces équipements soient à même de transmettre ces alarmes. Or, quand un équipement est défectueux ou totalement hors service, il n'est généralement pas à même de transmettre des alarmes permettant de signaler sa propre indisponibilité. La détection de l'indisponibilité d'un équipement est donc réalisée par des voisins de cet équipement qui sont eux capables de transmettre ces alarmes, du moins en partie. De plus, le traitement des alarmes est une tâche moins prioritaire que le traitement du reroutage des données. Une telle situation induit des temps de latence dans la transmission de l'information d'indisponibilité et d'autre part elle ne permet pas de connaître avec précision le temps durant lequel l'équipement a été réellement indisponible.

L'utilisation d'équipement d'injection de données n'est pas suffisamment précise car l'injection des données de test n'est pas réalisée en continu afin de ne pas surcharger et encombrer le réseau. Ainsi, la disponibilité réelle du réseau n'est pas obtenue à l'aide de ces équipements d'injection car il se peut très bien que l'injection de données soit réalisée à des moments où la disponibilité est totale alors même qu'une défaillance d'un chemin ou d'un équipement se produit immédiatement après. L'indisponibilité, pourtant bien réelle de l'équipement ou du chemin, a donc été manquée. De plus, cette technique nécessite une utilisation de nombreux équipements d'injection et consomme inutilement des ressources réseau.

L'utilisation de compteurs de trafic induit également un temps de latence de la transmission de l'information et une imprécision qui n'est pas acceptable. En effet, il n'est pas du tout inenvisageable qu'un équipement en état de fonctionnement n'achemine pas du tout de trafic. Un tel cas peut se produire lorsqu'une métrique (un poids) associé à un chemin est trop important par rapport à une pluralité d'autres chemins utilisables, de sorte que l'équipement n'acheminera aucun trafic, car le poids des chemins transitant par cet équipement est trop élevé.

Ainsi les techniques de l'art antérieur posent des problèmes de précision des calculs de disponibilité. Ces problèmes de précision peuvent mener à des interprétations erronées de la disponibilité d'un réseau de communication et mener à des prises de décisions concernant l'architecture du réseau de communication qui ne sont pas en adéquation avec les problèmes réels du réseau de communication.

## 3 RESUME DE L'INVENTION

L'invention ne présente pas ces inconvénients de l'art antérieur. En effet, l'invention concerne un procédé d'obtention d'une information représentative d'une disponibilité d'un réseau de communication comprenant une pluralité d'équipements s'échangeant des données de routage selon un protocole de routage.

Selon l'invention un tel procédé comprend :

- une phase d'enregistrement en ordre chronologique d'au moins certaines desdites données de routage échangées entre au moins un premier et au moins un deuxième équipement ;
- une phase de comptabilisation de durées d'indisponibilité en fonction desdites données de routage enregistrées en ordre chronologique pour une période temporelle prédéterminée ;
- une phase d'obtention de ladite information représentative d'une disponibilité pour ladite période temporelle en fonction desdites durées d'indisponibilité comptabilisées.

Ainsi, l'invention permet d'utiliser les données de routage échangées entre les équipements des réseaux de communication pour déterminer de manière précise l'indisponibilité (ou la disponibilité) du réseau de communication. En effet, les données de routage sont des données précises qui sont échangées quasiment immédiatement entre les équipements de routage pour calculer les routes menant d'une source à une destination.

Les données de routage permettent de définir des chemins de transmission de données entre une pluralité de sources et une pluralité de destinations au sein dudit réseau de communication.

L'utilisation de ces données de routage est donc plus efficace que l'utilisation d'alarmes ou l'injection de données de test puisque d'une part le temps de latence des alarmes n'est pas pris en compte et d'autre part on n'utilise pas de nouvelles données qui consomment des ressources du réseau de manière inutile. Les données de routage sont enregistrées en ordre chronologique, c'est-à-dire que l'on conserve un historique des données de routage. Cette phase est également nommée historisation par la suite.

Le protocole de routage est par exemple un protocole à état de liens, tels que IS-IS ou OSPF.

Selon un mode de réalisation particulier de l'invention, ladite phase d'enregistrement en ordre chronologique comprend :

- une étape de capture d'au moins une donnée de routage relative à au moins un voisinage entre au moins deux équipements de routage dudit réseau de communication ;
- une étape de comparaison de ladite au moins une donnée de routage capturée avec au moins une donnée précédemment enregistrée en ordre chronologique concernant un voisinage identique;
- une étape d'enregistrement en ordre chronologique de ladite donnée de routage capturée lorsque ladite étape de comparaison fait apparaître une différence.

Ainsi, l'invention permet une historisation des données de changement de voisinage qui circulent entre les équipements du réseau de communication. Cette historisation, qui est réalisée en enregistrant de manière chronologique les données de routage, permet de créer une table de routage historisée, qu'il est possible d'exploiter pour déterminer les éventuelles indisponibilités du réseau de communication.

Selon une caractéristique particulière de l'invention, ladite étape d'enregistrement en ordre chronologique comprend une étape d'ajout d'une donnée représentative d'une date et/ou d'une heure à ladite au moins une donnée de routage capturée, formant au moins un enregistrement horodaté, et une étape d'enregistrement dudit au moins un enregistrement horodaté au sein d'une base de données.

Selon un mode de réalisation particulier de l'invention, ladite phase de comptabilisation comprend, pour ladite période temporelle prédéterminée :

- une étape de détermination d'au moins une partie des chemins disponibles dudit réseau de communication au début de ladite période temporelle;
- pour chacun des chemins préalablement déterminés, une étape de comptabilisation desdites durées d'indisponibilité comprenant :
- une étape d'ajout d'une durée d'indisponibilité fixe lorsqu'un chemin entre une source et une destination change suite à une perte de lien ;
- une étape d'ajout d'une durée d'indisponibilité variable lorsqu'un routage entre une source et une destination est impossible, correspondant à une durée constatée d'indisponibilité à l'aide desdites données enregistrées en ordre chronologique.

Selon un mode de réalisation particulier de l'invention, ladite phase d'obtention de ladite information représentative d'une disponibilité *Disp* comprend une étape de calcul selon la formule suivante :

$$Disp = 1 - \frac{\sum Indsp}{T \times NCh}$$

où :

- $\sum Indsp$ correspond à la somme des indisponibilités (en secondes) pour ladite période temporelle prédéterminée ;
- *T* correspond au nombre total de secondes sur ladite période temporelle et
- *NCh* correspond au nombre total de chemin dans le réseau de communication.

Selon une caractéristique particulière de l'invention, lesdites données de routage sont des paquets à état de liens ou « link-state », établissant et maintenant des informations d'adjacence entre équipement de routage voisin dudit réseau de communication.

L'invention concerne également un dispositif d'obtention d'une information représentative d'une disponibilité d'un réseau de communication comprenant une pluralité d'équipements s'échangeant des données de routage. Selon l'invention, un tel dispositif comprend :

- des moyens d'enregistrement en ordre chronologique d'au moins certaines desdites données de routage échangées entre au moins un premier et au moins un deuxième équipement ;
- des moyens de comptabilisation de durées d'indisponibilité en fonction desdites données de routage enregistrées en ordre chronologique pour une période temporelle prédéterminée ;
- des moyens d'obtention de ladite information représentative d'une disponibilité pour ladite période temporelle en fonction desdites durées d'indisponibilités comptabilisées.

Selon un mode de réalisation particulier de l'invention, ledit dispositif est déclaré comme étant un voisin d'un équipement de routage parmi lesdits équipements de routage dudit réseau de communication afin que ledit équipement de routage transmette audit dispositif lesdites données de routage.

L'invention concerne également un équipement de routage comprenant un dispositif d'obtention d'une information représentative d'une disponibilité, tel que décrit précédemment.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé d'obtention tel que décrit précédemment.

## 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 présente un synoptique de la phase d'enregistrement en ordre chronologique des données de routage selon un mode particulier de réalisation de l'invention;
- la figure 2 illustre une méthode de traitement des données enregistrées en ordre chronologique (historisées) selon un mode particulier de réalisation de l'invention;
- les figures 3A, 3B et 3C décrivent des états de liens entre équipement de routage pour un exemple de mise en oeuvre de la méthode de l'invention;
- la figure 4 illustre l'architecture matérielle d'un dispositif d'obtention selon un mode particulier de réalisation de l'invention.

## 5 DESCRIPTION DETAILLEE DE L'INVENTION

### 5.1 Rappel du principe de l'invention

L'invention permet d'obtenir une information de disponibilité d'un réseau de communication rapidement et sans devoir procéder à des modifications importantes au sein du réseau et en ne noyant pas le réseau avec de nouvelles données consommatrices de ressources. L'invention utilise ainsi des données existantes, qui transitent déjà sur le réseau de communication : ce sont les données de routage que se transmettent mutuellement les équipements qui composent le réseau. Ces données de routages servent aux équipements pour définir des chemins de transmission de données. Les inventeurs ont eu l'idée d'exploiter ces données de routage de manière astucieuse afin de déterminer la disponibilité du réseau de communication. Or ces données ne peuvent pas, à priori, être utilisées pour cet objet car elles ne disposent pas des caractéristiques nécessaires. Les inventeurs ont donc eu l'idée d'y adjoindre des données complémentaires, permettant de créer un historique des données de routage reçues pour permettre ensuite un calcul de disponibilité pour une période donnée : il s'agit d'un enregistrement en ordre chronologique, également appelé historisation.

En effet, la disponibilité d'un réseau de communication est liée au fait que ce dernier ait pu converger vers un état stable. Or un réseau a convergé vers un tel état stable lorsque tous les équipements dudit réseau sont capables de router les données vers la bonne destination. Cette convergence est assurée grâce aux données de routage véhiculées par des protocoles de routage responsables de l'annonce des événements.

Le principe général de l'invention repose donc sur l'enregistrement des données véhiculées par les protocoles de routage en y adjoignant une donnée permettant une historisation (une date et une heure par exemple) dans le but d'être utilisé pour un calcul de disponibilité de réseau. Cet enregistrement est appelé enregistrement en ordre chronologique ou plus généralement historisation. Les données de routage sont capturées, historisées et enregistrées pour être ensuite traitées et permettre l'obtention d'une information représentative d'une disponibilité, comme par exemple un pourcentage de disponibilité au cours d'une période donnée ou un nombre d'équipements indisponibles au cours d'une période donnée.

Une telle historisation peut, selon l'invention, être mise en oeuvre au sein d'un équipement spécifique, nommé « sonde ». Ceci n'est cependant pas obligatoire et il est tout à fait envisageable de doter un équipement particulier du réseau de cette capacité d'historisation. Plus particulièrement, un routeur peut être modifié pour pouvoir mettre en oeuvre le procédé de l'invention par exemple.

De même, l'historisation peut ne pas être confiée à un seul équipement ou à une seule sonde et il est possible de prévoir une sonde par domaine administratif du réseau de communication (c'est-à-dire par sous réseau) afin de calculer indépendamment la disponibilité des sous réseaux puis de combiner ces disponibilités pour obtenir une disponibilité globale du réseau de communication (par exemple soit en réalisant une moyenne de disponibilité ou en prenant la valeur minimum de toutes les disponibilités comme étant la disponibilité globale du réseau).

Par la suite, on présente notamment le cas d'une mise en oeuvre du procédé de l'invention en utilisant des paquets dits "link-state", utilisés par les protocoles tels qu'IS-IS et OSPF. Il est clair cependant que l'invention ne se limite pas à cette technologie particulière, mais peut également être mise en oeuvre en utilisant tout type de données de routage dans un réseau maillé ou des équipements de routage s'échangent ce type de données.

5.2 Description d'un mode de réalisation

On présente dans ce mode de réalisation, la mise en oeuvre du procédé de l'invention dans un réseau de communication dans lequel les messages échangés entre équipements de routage de données sont des messages de type "link-state". Dans ce mode de réalisation de l'invention, le calcul d'une disponibilité du réseau de communication repose sur la caractérisation des informations véhiculées par les protocoles de routage. Plus particulièrement, pour chaque paquet "link-state" reçu par un équipement mettant en oeuvre l'invention, la technique de l'invention compare les données reçues avec les données reçues dans un paquet "link-state" précédent. Si au moins une information concernant l'état ou la métrique de liens ou de routeur change, alors le paquet reçu (ou a minima les changements) est conservé.

Grâce aux paquets (ou aux premiers paquets et à la liste des changements, si les changements entre paquets sont les seules données conservées), la technique de l'invention permet de reconstituer dans le temps la table de routage (ou RIB de l'anglais « Routing Information Base »), de chaque équipement de routage du réseau de communication. Cette reconstitution de la table de routage d'un équipement permet de savoir si un routeur a changé de chemin pour le transfert des paquets IP vers sa destination et si une telle destination est toujours disponible. Ceci est expliqué plus en détail dans la suite de cet exposé.

En effet, un paquet n'atteint sa destination que si un premier routeur sait le transférer vers un second routeur qui le transfère lui-même par la suite à un troisième routeur, et ainsi de suite jusqu'à atteindre sa destination, l'invention reconstitue les tables de routage à un instant $t$ donné et permet ainsi de savoir si un chemin d'un routeur source S à un routeur de destination D existe, n'existe plus ou a changé (par exemple du fait d'une défaillance d'un équipement).

Lorsque ce calcul est réalisé pour tous les couples de routeurs {S;D} possibles du réseau, on connaît le nombre de chemins disponibles, non disponibles ou impactés par un changement de routage à cet instant $t$.

Le rapport entre les chemins disponibles (incluant les changements de routage) et le nombre total de chemins possibles donne le pourcentage de chemins disponible au temps $t$. En calculant les chemins à un temps $t$, et en les comparant avec les chemins à un temps $t-1$, on obtient la disponibilité sur le temps $]t-1;t]$. En répétant ce calcul pour chaque intervalle fixe de temps $]t-1;t]$ jusqu'à couvrir la totalité d'une période étudiée, et en faisant la moyenne de ces pourcentages, l'invention permet d'obtenir la disponibilité moyenne du réseau, soit le pourcentage de temps durant lequel un paquet entrant dans n'importe quel routeur du réseau de communication a pu joindre sa destination dans ce même réseau.

Une difficulté, avec cette première approche de la technique de l'invention est qu'elle conduit, de prime abord, à devoir effectuer des calculs de pourcentage de chemin pour des intervalles de temps de quelques millisecondes ou microsecondes du fait de mécanismes de rafraîchissement de données par exemple. Or de tels calculs peuvent ne pas être efficaces. Pour limiter les calculs et obtenir un résultat qui soit moins consommateur de ressources, les inventeurs ont eu l'idée d'une autre technique d'historisation amenant au même résultat et consistant à n'effectuer ces calculs qu'aux moments où des changements ont été enregistrés, un changement étant détecté à l'aide de paquets dits *« non refresh »* pour lesquels les données contiennent des modifications topologiques.

En effet, il existe, dans les protocoles susmentionnés, des paquets qui permettent de transmettre, à intervalles réguliers, des données de routage au voisin d'un routeur donné, ceci même si aucune modification n'est intervenue dans l'intervalle. Ces paquets sont appelés *« refresh »*. Sachant qu'aucun changement ne se produit entre deux paquets *« non refresh »*, il suffit d'effectuer les calculs seulement au temps $t$ de réception de paquets *« non refresh »* et de pondérer le pourcentage de disponibilité de l'intervalle de temps par la durée de l'intervalle ramenée au temps total de la période étudiée pour pouvoir au final effectuer la moyenne de disponibilité en obtenant le même résultat que précédemment.

Par extension, il est possible de mettre en oeuvre cette technique de pondération, si besoin, à des chemins ou des routeurs spécifiques afin d'obtenir une disponibilité plus personnalisée (car il s'agit de client multi-raccordés, de routeurs plus sensibles, etc.).

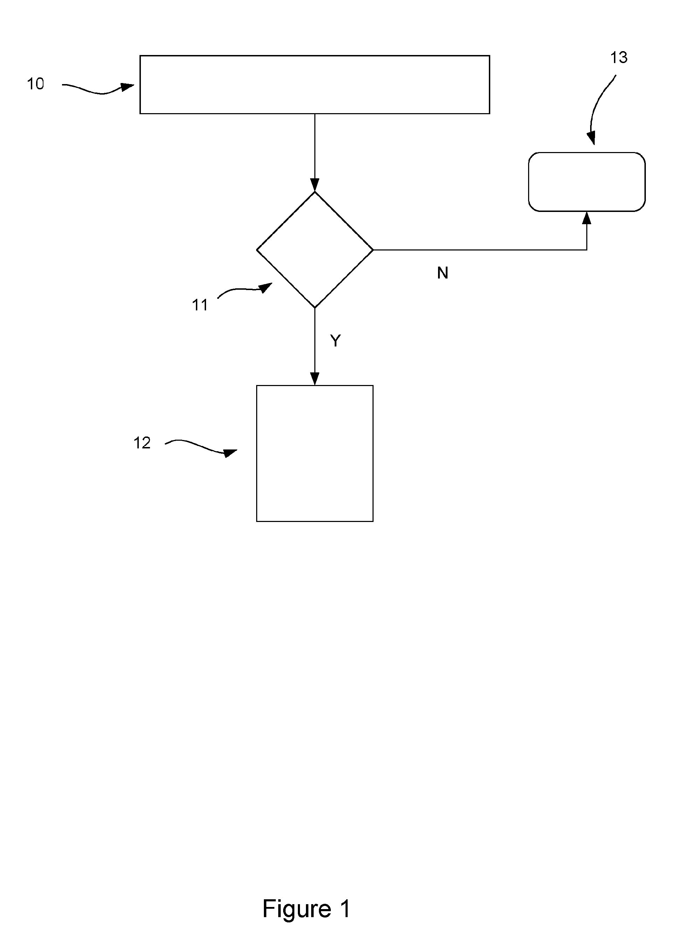

On présente, en relation avec la figure 1, un mode de réalisation d'une phase d'historisation selon un mode particulier de réalisation de l'invention. Le procédé comprend :

- une étape de capture (10) d'au moins une donnée représentative d'un routage, sous la forme d'un paquet de type "link-state". Ce paquet est émis à partir d'un premier équipement de routage vers un deuxième équipement, tel que la sonde de l'invention, ou un autre équipement de routage adapté pour la mise en oeuvre du procédé de l'invention ;

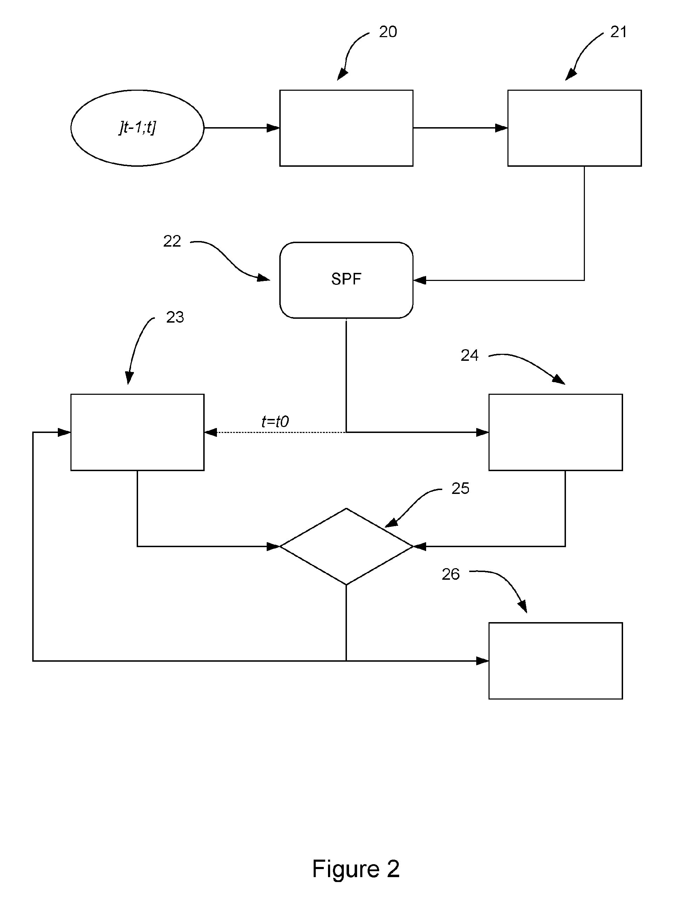

- une étape de stockage, non représentée sur la figure 2, qui peut être temporaire, de ce paquet "link-state" ;
- une étape de comparaison (11) de ce paquet "link-state" avec au moins un autre paquet link-state lié au même équipement de routage;
- une étape d'enregistrement et d'horodatage (12) de ce paquet "link-state" si au moins une donnée qu'il contient a été modifiée par rapport au paquet correspondant précédemment reçu ;
- une étape de rejet (13) de ce paquet "link-state" si aucune des données qu'il contient n'a été modifiée par rapport au paquet correspondant précédemment reçu.

On présente, en relation avec la figure 2, un schéma d'une méthode de calcul d'une disponibilité basée sur une historisation selon l'invention.

Pour une période prédéterminée (par exemple 24 heures), suite à la phase d'historisation (voir figure 1), on dispose d'une base de données (20) de paquets de routage ("link-state packets" ou LSP) issus de (12). A l'aide de cette base de données (20), on construit une base de données temporaire (21) contenant les LSP utilisés au temps $t$ pour construire la RIB de chaque routeur mise à jour au temps $t$. Cette base de données (21) reflète donc l'état du réseau au temps $t$.

Les LSP mis à jour dans la base de données (21) sont fournis à un composant effectuant, comme les routeurs du réseau, le calcul de SPF (22) retournant la liste des chemins les plus courts en fonction des LSP fournis. Pour chaque temps t (temps auquel il y a eu des modifications de routage), les chemins les plus courts sont insérés dans une base de données (24) qui liste les chemins disponibles aux temps $t$. Lorsque $t=t0$, les chemins les plus courts sont en même temps insérés dans une base de données (23) qui comprend les chemins au temps $t-1$. Il s'ensuit, pour chaque temps t, une comparaison, réalisée par un composant adéquat (25), entre les chemins disponibles au temps $t$ et ceux disponibles au temps $t-1$, qui conduit à la comptabilisation des indisponibilités successives sur l'intervalle $]t-1;t]$. Il est à noter qu'un re-routage et une disparition totale d'une connectivité n'ont pas le même impact au niveau des indisponibilités. Ceci est détaillé ultérieurement. Cette comptabilisation est enregistrée dans une liste de moyennes de disponibilités 26. Puis les données du temps t remplacent les données $t-1$ dans la base de donnée 23, et on poursuit la comptabilisation en passant à l'intervalle temporel suivant, jusqu'à couvrir l'intégralité de la période temporelle prédéterminée (par exemple 24 heures).

Ainsi, ce procédé comprend, de manière générale, une phase de comptabilisation des indisponibilités successives à l'aide des paquets "link-state" historisés et une phase de calcul de la disponibilité à l'aide des indisponibilités comptabilisés.

Plus particulièrement, la phase de comptabilisation des indisponibilités comprend, pour chaque chemin initialement défini du réseau de communication et pour chaque paquet historisé concernant ce chemin :

- une étape de vérification d'une différence entre un routage courant et un routage précédent délivrant une information représentative d'une différence;
- une étape d'ajout d'un temps d'indisponibilité fixe lorsque ladite une information représentative d'une différence indique une différence de routage suite à une perte de lien ;
- une étape d'ajout d'un temps d'indisponibilité variable correspondant au temps séparant le paquet historisé du paquet précédent lorsque ladite information représentative d'une différence indique une absence d'un routage précédent.

En d'autres termes, cette phase de comptabilisation des indisponibilités consiste à sommer les différentes indisponibilités du réseau de communication à l'aide d'une part des chemins des paquets "link-state", qui permettent de détecter les différences de routage et d'attribuer pour une donnée, un temps d'indisponibilité fixe correspondant à la propagation d'un nouveau chemin dans le réseau et d'autre part un temps d'indisponibilité variable, en fonction de l'horodatage, lorsqu'une absence de lien coupe définitivement l'accès à un équipement de routage.

La phase de calcul de la disponibilité moyenne finale *Disp* est réalisée en utilisant la formule suivante :

$$Disp = 1 - \frac{\sum Indsp}{T \times NCh}$$

où :

- $\sum Indsp$ correspond à la somme des indisponibilités (en secondes) ;
- $T$ correspond au nombre total de secondes sur la période considérée et

- *NCh* correspond au nombre total de chemin dans le réseau de communication.

Cette solution présente plusieurs avantages. Comparée à la méthode récupérant les alarmes, elle est plus précise dans le temps (réaction quasi immédiate du protocole contre un délai de traitement non déterministe dans les routeurs) et plus fiable (si un routeur devient hors service, il ne peut pas envoyer d'alarmes alors qu'en utilisant de manière intelligente le protocole de routage, ses voisins signalent immédiatement la tombée). La précision temporelle est encore plus importante dans cette méthode comparée à la méthode basée sur la collecte des compteurs de trafic car dans le premier cas le routeur annonce un changement dès qu'il se produit tandis que dans le second cas, on s'enquiert des états à intervalle de temps régulier ce qui introduit un lissage des événements dans cet intervalle. Finalement, comparée à la méthode utilisant des sondes injectant du trafic dans le réseau, cette méthode est moins coûteuse en utilisation de bande passante et de déploiement car seule une sonde protocolaire peut surveiller le réseau quand il faut beaucoup de sondes pour superviser tous les chemins de trafic.

La contrepartie de cette méthode est de devoir établir une communication avec un routeur du réseau pour récupérer les données. La charge induite est cependant minime mais suppose l'intervention d'une autorité disposant des droits d'administration sur le domaine.

5.3 <u>Exemple de mise en oeuvre</u>

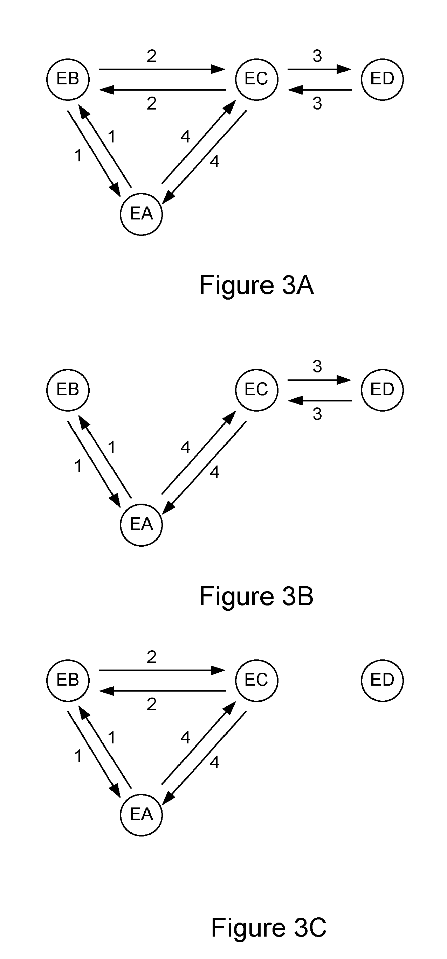

On présente, en relation avec les figures 3A, 3B et 3C, un exemple de mise en oeuvre des techniques de l'invention appliquées à un réseau de communication IP comprenant quatre routeurs EA, EB, EC et ED utilisant le protocole IS-IS. Au sein de ce réseau, les routeurs EA, EB et EC sont directement interconnectés, c'est à dire qu'il existe un chemin direct permettant d'atteindre directement EA à partir de EB et de EC, un chemin direct permettant d'atteindre EB à partir de EA et de EC et un chemin direct permettant d'atteindre EC à partir de EB et de EA. Le routeur ED pour sa part n'est directement connecté qu'au routeur EC. Il est donc nécessaire de passer par le routeur EC pour atteindre le routeur ED à partir du routeur EA ou du routeur EB. Un lien est représenté par le protocole IS-IS par deux adjacences orientées interconnectant deux routeurs de manière bidirectionnelle. Chaque interconnexion entre deux routeurs comprend une métrique permettant d'indiquer un poids associé à l'interconnexion. Ainsi, par exemple, le poids pour aller directement de EA à EC est de « 4 » alors que le poids pour aller de EA à EB est de « 1 ».

Dans cet exemple, une sonde (SA), non représentée sur les figures 3A, 3B, 3C, est connectée au routeur EA et est déclarée comme étant un "voisin IS-IS" de EA. En IS-IS, les paquets dits "link-state" sont appelés LSP. La sonde SA, en tant que voisin IS-IS de EA, reçoit alors de ce dernier les LSP que le routeur EA d'une part reçoit et d'autre part émet.

Dans cet exemple, on considère également que sur un intervalle d'une journée courant de 0h00 à 23h59, le lien entre EB et EC est indisponible de 15h00 à 15h10 puis le lien entre EC et ED à partir de 23h55.

La sonde SA recevra alors les LSP suivants aux horaires suivants :

| Heure | Provenance | Contenu |
|---|---|---|
| 0h00 | LSP de EA | EB voisin de EA (métrique 1) ; EC voisin de EA (métrique 4) |
| 0h00 | LSP de EB | EA voisin de EB (métrique 1) ; EC voisin de EB (métrique 2) ; |
| 0h00 | LSP de EC | EA voisin de EC (métrique 4) ; EB voisin de EC (métrique 2) ; ED voisin de EC (métrique 3) ; |
| 0h00 | LSP de ED | EC voisin de ED (métrique 3) ; |
| 15h00 | LSP de EB | EA voisin de EB (métrique 1) ; |
| 15h00 | LSP de EC | EA voisin de EC (métrique 4) ; ED voisin de EC (métrique 3) ; |
| 15h10 | LSP de EB | EA voisin de EB (métrique 1) ; EC voisin de EB (métrique 2) ; |
| 15h10 | LSP de EC | EA voisin de EC (métrique 4) ; EB voisin de EC (métrique 2) ; ED voisin de EC (métrique 3) ; |

(suite)

| Heure | Provenance | Contenu |
|-------|-----------|---------|
| 18h00 | LSP de EA | EB voisin de EA (métrique 1) ;<br>EC voisin de EA (métrique 4) |
| 23h55 | LSP de EC | EA voisin de EC (métrique 4) ;<br>EB voisin de EC (métrique 2) ; |

Dans cet exemple, on a introduit une transmission de paquets à 18h00 pour illustrer le fait que le procédé réalise des mises à jour de données sous la forme de « refresh ».

En appliquant le procédé selon l'invention, on obtient 9 enregistrements d'historisation (sur les 10 LSP *différents* qui ont été successivement reçus) :

- LSP de EA dont les voisins sont EB (métrique 1) et EC (métrique 4) est reçu à 0h00. Il n'y a pas de version précédente du LSP, donc il est enregistré et horodaté à 0h00.
- LSP de EB dont les voisins sont EA (métrique 1) et EC (métrique 2) est reçu à 0h00. Il n'y a pas de version précédente du LSP, donc il est enregistré et horodaté à 0h00.
- LSP de EC dont les voisins sont EB (métrique 2), EA (métrique 4) et ED (métrique 3) est reçu à 0h00. Il n'y a pas de version précédente du LSP, donc il est enregistré et horodaté à 0h00.
- LSP de ED dont les voisins sont EC (métrique 3) est reçu à 0h00. Il n'y a pas de version précédente du LSP, donc il est enregistré et horodaté à 0h00.
- LSP de EB dont le voisin est EA (métrique 1) est reçu à 15h00. Par rapport au précédent LSP émis par EB, il manque un voisin. Ce LSP est donc enregistré et horodaté à 15h00.
- LSP de EC dont le voisin est EA (métrique 4) et ED (métrique 3) est reçu à 15h00. Par rapport au précédent LSP émis par EB, il manque un voisin. Ce LSP est donc enregistré et horodaté à 15h00.
- LSP de EB dont les voisins sont EA (métrique 1) et EC (métrique 2) est reçu à 15h10. Il y a un voisin supplémentaire par rapport au précédent envoi (15h00). Le LSP est donc enregistré et horodaté à 15h10.
- LSP de EC dont les voisins sont EB (métrique 2), EA (métrique 4) et ED (métrique 3) est reçu à 15h10. Il y a un voisin supplémentaire par rapport au précédent envoi (15h00). Le LSP est donc enregistré et horodaté à 15h10.
- LSP de EA dont les voisins sont EB (métrique 1) et EC (métrique 4) est reçu à 18h00. Le LSP n'a aucune différence avec le LSP précédemment sauvegardé, il n'est donc pas enregistré.
- LSP de EC dont les voisins sont EB (métrique 2) et EA (métrique 4) est reçu à 23h55. Il y a un voisin manquant (ED) par rapport au précédent envoi. Le LSP est donc enregistré et horodaté à 23h55.

A partir de ces 9 enregistrements, la topologie du réseau de communication est déterminée à *t = t0 = 0h00* :

- Il y a 12 chemins déterminés à l'aide de l'algorithme du plus court chemin ou SPF (« Shortest Path First ») :

  - [EA;EB] est le chemin de EA à EB en direct,
  - [EA;EC] est le chemin de EA à EC en passant par EB,
  - [EA;ED] est le chemin de EA à ED en passant par EB et EC,
  - [EB;EA] est le chemin de EB à EA en direct,
  - [EB;EC] est le chemin de EB à EC en direct,
  - [EB;ED] est le chemin de EB à ED en passant par EC,
  - [EC;EA] est le chemin de EC à EA en passant par EB,
  - [EC;EB] est le chemin de EC à EB en direct,
  - [EC;ED] est le chemin de EC à ED en direct.
  - [ED;EA] est le chemin de ED à EA en passant par EC et EB,
  - [ED;EB] est le chemin de ED à EB en passant par EC,
  - [ED;EC] est le chemin de ED à EC en direct.

- Puisque *t = t0*, la comparaison avec les chemins précédents retourne une situation identique, donc *0 sec* est ajouté dans la base des moyennes d'indisponibilité à t0.

Le point de départ du calcul de disponibilité a donc été défini. Il se base sur 12 chemins représentatifs des possibilités de transmission de données entre les équipements de routage qui composent le réseau de communication.

A partir de ce point d'origine, on utilise les enregistrements suivants (15h00, 15h10, 23h55 pour déterminer l'évolution des tables de routage des équipements et en déduire des indisponibilités : ici il y a donc quatre intervalles temporels : ] 00h00-15h00], ]15h00-15h10], ]15h10-23h55] et ]23h55-23h59] dans la période temporelle prédéterminée de 24h00).

- Le temps suivant est $t = 15h00$ (inférieur à $tmax = 23h59$), les calculs de plus courts chemins (SPF) avec les versions actualisées des LSPs de EB et EC font disparaître le lien EB-EC (dans les deux sens).
- En comparaison avec la liste précédente des chemins, il y a changement de routage sur les huit chemins [EB;EC], [EB;ED], [EA;EC], [EA;ED], [EC;EB], [ED;EB], [EC;EA] et [ED;EA] suite à la perte de lien. Une valeur fixe d'indisponibilité (liée au temps de convergence protocolaire, pour lequel une valeur constatée est par exemple *40ms*) est alors ajouté à la liste des moyennes d'indisponibilité pour chaque chemin impacté, soit *320ms* (car il y a huit chemins impactés) et pour la période *]t0;15h00]*.
  Il est important de noter que l'on ajoute une valeur fixe d'indisponibilité liée à la mise en oeuvre effective de chaque nouveau chemin dans les équipements de routage concernés. En effet, il y a une différence entre une perte de lien (en l'occurrence EB-EC) et une perte d'un équipement. Dans notre cas, même si le lien est perdu, il est toujours possible d'atteindre toutes les destinations à l'aide d'autres chemins. Cependant, les routeurs utilisent un chemin indisponible (pointant vers le lien disparu) jusqu'à ce que l'information soit traitée.

Donc, il n'y a une indisponibilité que pendant le temps de calcul des nouveaux chemins.

- Le temps suivant est $t = 15h10$ (*inférieur à tmax = 23h59*), les calculs de plus courts chemins SPF avec les versions actualisées des LSPs de EB et EC font apparaître le lien EB-EC.
- En comparaison avec la liste précédente des chemins, il y a re-routage des chemins [EB;EC], [EB;ED], [EA;EC], [EA;ED], [EC;EB], [ED;EB], [EC;EA] et [ED;EA] suite à une montée de lien. Dans ce cas, *0 seconde* d'indisponibilité est ajoutée à la liste des moyennes d'indisponibilité, car il s'agit d'une remontée de lien. Même s'il s'agit aussi d'un re-routage, l'ancien chemin est toujours utilisable, il n'y a donc pas de perte de paquet jusqu'au basculement vers le nouveau chemin.
- Le temps suivant est $t = 23h55$ (inférieur à $tmax = 23h59$), les calculs de SPF avec la version actualisée du LSP de EC font disparaître le lien EC-ED.
- En comparaison avec la liste précédente des chemins, il y a perte de routage des chemins [ED;EC], [ED;EB], [ED;EA], [EC;ED], [EB;ED] et [EA;ED] (car il n'y a pas d'autre chemin pour atteindre ED que de passer par EC, de sorte que le routage est impossible vers ED). Dans ce cas, compte tenu qu'un routage existait auparavant, *0 seconde* d'indisponibilité est ajoutée à la liste des moyennes d'indisponibilité.
- Il n'y a plus d'événements jusqu'à *tmax*. En comparant la dernière liste de chemin avec elle-même, on voit que les chemins [ED;EC], [ED;EB], [ED;EA], [EC;ED], [EB;ED] et [EA;ED] sont toujours perdus. Il y a donc 4 minutes d'indisponibilité à ajouter pour les six chemins, soit 1440 secondes, à la liste des moyennes d'indisponibilité.

On calcule ensuite aisément une disponibilité moyenne finale Disp en utilisant la formule précédemment décrite, ce qui donne dans l'exemple précédent 1 moins la somme des indisponibilités (soit 1440,320 sec) divisée par le produit de l'intervalle total de temps (i.e. 23h59, soit 86340 sec) et du nombre total des chemins (i.e. 12). Le résultat de notre exemple est alors égal à 99.86098%, soit une mesure beaucoup plus précise que les mesures réalisées au préalable avec les techniques de l'art antérieur.

On comprend donc que, selon l'invention, on prend en compte de manière plus précise les changements qui interviennent au sein du réseau de communication pour déterminer la disponibilité de celui-ci. On comprend également que les métriques qui sont associées aux chemins ont une importance dans l'historisation. En effet, à supposer dans l'exemple précédent qu'à 15h00, le lien EA-EC ait disparu (à la place du lien EB-EC), cette disparition n'aurait entraîné aucune perturbation dans le routage des données. En effet, la métrique associée à ce lien étant de 4, la disparition n'aurait pas eu d'effet sur le routage des données car ce lien n'était pas utilisé du fait de la métrique trop importante. Il est en effet plus économique d'emprunter EA-EB-EC pour se rendre de EA à EC car la somme des métriques est de 3 alors qu'une transmission directe de EA à EC coûte 4.

Ainsi, à la différence des techniques de l'art antérieur, basées sur des alarmes, l'invention propose une technique plus réaliste pour le calcul de la disponibilité. Ceci est rendu possible, selon l'invention, grâce à l'historisation des LSP qui sont transmis entre les équipements du réseau.

5.4 Dispositif d'obtention

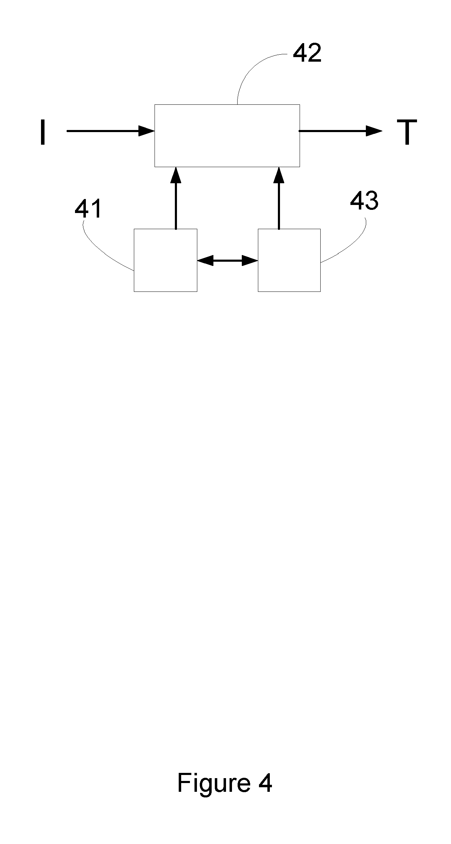

On présente, en relation avec la figure 4, un mode de réalisation d'un dispositif d'obtention selon l'invention. Un tel dispositif peut être un serveur d'application tel que celui présenté précédemment qui peut intégrer une ou plusieurs bases de données d'historisation des données de routage.

Un tel dispositif comprend une mémoire 41 constituée d'une mémoire tampon, une unité de traitement 42, équipée par exemple d'un microprocesseur P, et pilotée par le programme d'ordinateur 43, mettant en oeuvre le procédé de d'obtention selon l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle que des données de voisinage en provenance d'un équipement de routage. Le microprocesseur de l'unité de traitement 42 met en oeuvre les étapes du procédé d'obtention décrit précédemment, selon les instructions du programme d'ordinateur 43, pour délivrer une information traitée T, telle que la disponibilité du réseau de communication pour une période donnée. Pour cela, le dispositif comprend, outre la mémoire tampon 41, des moyens d'enregistrement en ordre chronologique d'au moins certaines desdites données de routage échangées entre au moins certains équipements du réseau de communication, des moyens de comptabilisation de durées d'indisponibilité en fonction desdites données de routage historisées pour une période temporelle donnée et des moyens d'obtention de ladite information représentative d'une disponibilité pour ladite période temporelle en fonction desdites durée d'indisponibilités comptabilisés.

Ces moyens sont pilotés par le microprocesseur de l'unité de traitement 42.

**Revendications**

1. Procédé d'obtention d'une information représentative d'une disponibilité d'un réseau de communication comprenant une pluralité d'équipements s'échangeant des données de routage selon un protocole de routage, **caractérisé en ce qu'**il comprend :

    - une phase d'enregistrement en ordre chronologique d'au moins certaines desdites données de routage échangées entre au moins un premier et au moins un deuxième équipement ;
    - une phase de comptabilisation de durées d'indisponibilité en fonction desdites données de routage enregistrées en ordre chronologique pour une période temporelle prédéterminée ;
    - une phase d'obtention de ladite information représentative d'une disponibilité pour ladite période temporelle en fonction desdites durées d'indisponibilité comptabilisées.

2. Procédé d'obtention selon la revendication 1, **caractérisé en ce que** ladite phase d'enregistrement en ordre chronologique comprend :

    - une étape de capture d'au moins une donnée de routage relative à au moins un voisinage entre au moins deux équipements de routage dudit réseau de communication ;
    - une étape de comparaison de ladite au moins une donnée de routage capturée avec au moins une donnée précédemment enregistrée en ordre chronologique concernant un voisinage identique ;
    - une étape d'enregistrement en ordre chronologique de ladite donnée de routage capturée lorsque ladite étape de comparaison fait apparaître une différence.

3. Procédé selon la revendication 2, **caractérisé en ce que** ladite étape d'enregistrement en ordre chronologique comprend une étape d'ajout d'une donnée représentative d'une date et/ou d'une heure à ladite au moins une donnée de routage capturée, formant au moins un enregistrement horodaté et une étape d'enregistrement dudit au moins un enregistrement horodaté au sein d'une base de données.

4. Procédé selon la revendication 1, **caractérisé en ce que** ladite phase de comptabilisation comprend, pour ladite période temporelle prédéterminée :

    - une étape de détermination d'au moins une partie des chemins disponibles dudit réseau de communication au début de ladite période temporelle ;
    - pour chacun des chemins préalablement déterminés, une étape de comptabilisation desdites durées d'indisponibilité comprenant :

        - une étape d'ajout d'une durée d'indisponibilité fixe lorsqu'un chemin entre une source et une destination change suite à une perte de lien ;
        - une étape d'ajout d'une durée d'indisponibilité variable lorsqu'un routage entre une source et une destination est impossible, correspondant à une durée constatée d'indisponibilité à l'aide desdites données enregistrées en ordre chronologique.

**5.** Procédé selon la revendication 1, **caractérisé en ce que** ladite phase d'obtention de ladite information représentative d'une disponibilité *Disp* comprend une étape de calcul selon la formule suivante :

$$Disp = 1 - \frac{\sum Indsp}{T \times NCh}$$

où :

- $\sum Indsp$ correspond à la somme des indisponibilités (en secondes) pour ladite période temporelle prédéterminée ;
- *T* correspond au nombre total de secondes sur ladite période temporelle et
- *NCh* correspond au nombre total de chemin dans le réseau de communication.

**6.** Procédé selon la revendication 1, **caractérisé en ce que** lesdites données de routage sont des paquets à état de liens, établissant et maintenant des informations d'adjacence entre équipement de routage voisin dudit réseau de communication.

**7.** Dispositif d'obtention d'une information représentative d'une disponibilité d'un réseau de communication comprenant une pluralité d'équipements s'échangeant des données de routage, **caractérisé en ce qu'**il comprend :

- des moyens d'enregistrement en ordre chronologique d'au moins certaines desdites données de routage échangées entre au moins un premier et au moins un deuxième équipement selon un protocole de routage;
- des moyens de comptabilisation de durées d'indisponibilité en fonction desdites données de routage enregistrées en ordre chronologique pour une période temporelle prédéterminée ;
- des moyens d'obtention de ladite information représentative d'une disponibilité pour ladite période temporelle en fonction desdites durées d'indisponibilités comptabilisées.

**8.** Dispositif selon la revendication 7, **caractérisé en ce qu'**il est déclaré comme étant un voisin d'un équipement de routage parmi lesdits équipements de routage dudit réseau de communication afin que ledit équipement de routage transmette audit dispositif lesdites données de routage.

**9.** Équipement de routage comprenant un dispositif d'obtention d'une information représentative d'une disponibilité selon la revendication 7.

**10.** Programme d'ordinateur **caractérisé en ce qu'**il comprend des instructions de code de programme pour la mise en oeuvre du procédé d'obtention selon l'une quelconque des revendications 1 à 6, lorsque ce programme est exécuté par un processeur.

10

13

11

N

Y

12

Figure 1

Figure 2

Figure 3A

Figure 3B

Figure 3C

Figure 4

Europäisches
Patentamt

European
Patent Office

Office européen
des brevets

**RAPPORT DE RECHERCHE EUROPEENNE**

Numéro de la demande

EP 10 16 4666

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/039352 A1 (EL-FEKIH RAMZI [US] ET AL) 4 avril 2002 (2002-04-04) * abrégé * * alinéas [0032] - [0034]; figures 1,10 * * alinéa [0048] * * alinéas [0079] - [0090]; tableau 2 * ----- | 1-9 | INV. H04L12/26 H04L12/56 |
| A | US 2006/209716 A1 (PREVIDI STEFANO B [IT] ET AL) 21 septembre 2006 (2006-09-21) * le document en entier * ----- | 1-9 | |
| A | US 2007/160061 A1 (VASSEUR JEAN-PHILIPPE [US] ET AL) 12 juillet 2007 (2007-07-12) * abrégé * ----- | 1-9 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 11 août 2010 | Fantacone, Vincenzo |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 16 4666

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-2010

| Document brevet cité au rapport de recherche | Date de publication | Membre(s) de la famille de brevet(s) | Date de publication |
|---|---|---|---|
| US 2002039352 A1 | 04-04-2002 | AUCUN | |
| US 2006209716 A1 | 21-09-2006 | AT 468686 T<br>CN 101288266 A<br>EP 1859574 A2<br>WO 2006101824 A2 | 15-06-2010<br>15-10-2008<br>28-11-2007<br>28-09-2006 |
| US 2007160061 A1 | 12-07-2007 | AUCUN | |

EPO FORM P0460

Pour tout renseignement concernant cette annexe : voir Journal Officiel de l'Office européen des brevets, No.12/82